Europäisches Patentamt

European Patent Office

Office européen des brevets

(11) Veröffentlichungsnummer: **0 065 258**
**B1**

(12) # EUROPÄISCHE PATENTSCHRIFT

(45) Veröffentlichungstag der Patentschrift:
**17.12.86**

(21) Anmeldenummer: **82104066.4**

(22) Anmeldetag: **11.05.82**

(51) Int. Cl.⁴: **B 01 J 19/06,** C 01 B 33/26 //
C05G3/00, C10L1/32

(54) Verfahren zum Eindicken von Lösungen unter Verwendung von üblicherweise nicht gelbildenden Tonen.

(30) Priorität: **15.05.81 US 263808**

(43) Veröffentlichungstag der Anmeldung:
**24.11.82 Patentblatt 82/47**

(45) Bekanntmachung des Hinweises auf die Patenterteilung:
**17.12.86 Patentblatt 86/51**

(84) Benannte Vertragsstaaten:
**BE DE FR GB**

(56) Entgegenhaltungen:
**US-A-2 885 360**
**US-A-3 914 384**
**US-H-951 006**

**JOURNAL OF APPLIED CHEMISTRY OF USSR, Band 52, Nr. 6, Juni 1979, Seiten 1145-1148, New York, USA G.V. PERMITINA et al.: "Complex slurried fertilizers containing a basic solution of ammonium polyphosphates"**

(73) Patentinhaber: **Pennsylvania Glass Sand Corporation, Berkeley Springs, West Verginia (US)**

(72) Erfinder: **Sawyer, Edgar Williams Jr., Ing., 209 Gaywood Drive, Hagerstown, Maryland (US)**

(74) Vertreter: **Türk, Dietmar, Dr. rer. nat., Türk, Gille + Hrabal Patentanwälte Bruckner Strasse 20, D-4000 Düsseldorf 13 (DE)**

EP 0 065 258 B1

**0 065 258**

## Beschreibung

Die Erfindung betrifft gelbildende Tone und insbesondere ein Verfahren zur Behandlung von Tonen, die üblicherweise kein Gel bilden, so daß sie als gelbildende Mittel zum Eindicken von wässrigen Lösungssystemen verwendet werden können.

Es ist bekannt, daß man bestimmte Produkte auf der Basis von Tonmineralien als gelbildende Tone verwenden kann. Man verwendet diese zum Eindicken von Borschlamm, flüssigen Tierfutter, suspendierten Düngemitteln, Rückläufen von der Asphaltdestillation, Formsandbinder auf Ölbasis und auch zur Stabilisierung von Kohle/Öl-Mischungen.

Die typischen gelbildenden Tone enthalten Bentonit, Attapulgit, Sepiolit und Hektorit. Man kann diese gelbildenden Tone zum Eindicken von wasser benutzen, in dem man eine vorgeschriebene Menge derselben in Wasser einrührt. Der erreichte Eindickgrad ist eine direkte Funktion der verwendeten Tonmenge und der in Form der Scherbehandlung in das System hineingesteckten Arbeit. Die gleichen Tone können zum Eindicken von organischen Lösungen verwendet werden, sofern man sie vor dem Einarbeiten in die Lösung mit bestimmten organischen Diopergiermitteln vorbehandelt oder sie der Lösung gleichzeitig mit einem Dispergiermittel zusetzt und die Wechselwirkung zwischen Ton und Dispergiermittel dadurch in situ herbeiführt.

Von den genannten Tonen sind die Bentonite und Hektorite aus Wyoming plättchenförmig und in der Lage, Wasser aufzusaugen und zu quellen und somit ihre eindickende Wirkung hervorzurufen. Das Quellen ist eine diesen Tonmineralien inne/wohnende Eigenschaft und beruht auf den Kationen (Kationentyp), die zwischen den benachbarten Plättchen angeordnet und solcher Art sind (z.B. Na ), daß sie die Aufnahme von Wasser gestatten. Ist der Ionengehalt des Wassers hoch, so saugen die Tone kein Wasser auf und können somit nicht als Eindicker für salzhaltige Lösungen dienen.

Attapulgit, Sepiolit und Palygorskit sind nadelförmige Tonminerale, die fähig sind, durch bloßes Einrühren in Wasser dieses einzudicken. Der Eindickvorgang wird von diesen Mineralien dadurch bewirkt, daß die einzelnen Nädelchen voneinander getrennt werden und sich gegenseitig in einer ausgedehnten Gelstruktur beeinflussen, wobei sie die zusammenhängende Wasserphase eindicken. Aufgrund ihrer Art der Viskositätsausbildung dicken diese Tonmineralien sehr wirkungsvoll Wasserlösungen ein, die eine hohe Ionenkonzentration aufweisen, z.B. gesättigte Natriumchloridlösung, Lösungen von Gips, Magnesiumsulfat usw. sie werden deshalb für gewöhnlich verwendet, wenn Verunreinigungen mit diesen Stoffen vorliegen.

Alle diese Tonmineralien können mit einem Dispergiermittel wie z.B. Natriumhexametaphosphat, Tetranatriumpyrophosphat (nachstehend als TSPP bezeichnet) und bestimmten Phosphatgläsern vordispergiert und als Eindickmittel durch Wiederausflocken des Tons verwendet werden kann, in dem man entweder einen das Dispergiermittel neutralisierenden Stoff (Salz enthaltend $Ca^{2+}$, $Al^{3+}$) oder andere polyvalente Kationen oder ausreichend ionisches Material hinzufügt, um die Doppelschicht zusammenzufallen zu lassen. Wassersysteme, die mit plättchenförmigen gelbildenen Mineralien wie Bentonit eingedickt sind, neigen zur Instabilität,wenn hohe Konzentrationen an ionischen Material oder geringe Konzentrationen von polyvalenten Kationen zugefügt werden. Wassersysteme, die mit wieder ausgeflockten nadelformigen Tonen eingedickt sind neigen nicht nur zu höherer Stabilität sondern zeigen auch eine höhere Wirksamkeit bezüglich der Gelbildung als wenn die gleichen Lösungen mit trockenen (undispergierten) Tonzusätzen eingedickt werden.

Bestimmte Tone vom Montmorilonittyp, die in der Nähe von Ochlocknee, Georgia zu finden sind, werden als nichtquellende Tone klassifiziert, da sie nur eine geringe Fähigkeit zeigen, Wasser einzudicken oder mit ihm ein Gel zu bilden. Dies ist eine Folge der Ionen ($Al^{3+}$ und $Ca^{2+}$) die zwischen den Schuppen dieser Tonarten zu finden sind, und die ein Aufsaugen von Wasser von sich aus oder ein Aufquellen nicht gestatten. In der Tat ergeben diese Tone mit Wasser keine Gelbildung selbst bei einer hohen Scherbehandlung. Die Tone werden geweiblich abgebaut und einer thermischen und mechanischen Behandlung unterworfen zur Erzeugung von granulatförmigen Absorbern, die als Öl-oder Fettabsorber, Träger für Agrarchemikalien und andere ähnliche Zwecke verkauft werden.

Die US-A 2 885 360 offenbart ein Verfahren zum Eindicken organischer Lösungen, wobei der verwendete Ton auf einen Feuchtigkeitsgehalt von 5 - 30% getrocknet, auf eine, Teilchengröße von 0,25 mm gemahlen und in Gegenwart eines Dispergiermittels der einzudickenden Lösund zugeführt wird. Die Mischung wird dabei durch Rühren einer Scherkraft unterworfen wobei gleichzeitig durch Erwärmen die Feuchtigkeit des eingesetzten Tons teilweise oder gänzlich zum Verdampfen gebracht wird.

Aus "Journal of Applied Chemistry of USSR", Bd. 52, Juni 1979, Seiten 1145 bis 1148 ist ferner die Herstellung von komplexen aufgeschlämmten Düngemitteln bekannt, die eine Lösung von Ammoniumpolyphosphaten enthalten und unter Verwendung von Tonen unterschiedlicher Zusammensetzung hergestellt werden.

Die Erfindung,wie sie in den Ansprüchen gekennzeichnet ist, löst die Aufgabe, ein Verfahren anzugeben, mit dem Tone vom Montmorillonittyp behandelt werden können, so daß sie als Gelbildner für wässrige Systeme einsetzbar sind.

Um die Tone als gelbildende Mittel für wässrige Systeme geeignet zu machen, werden sie bis auf einen Feuchtigkeitsgrad von 10-bis 15% getrocknet und auf eine Korngröße kleiner als 45μm gemahlen. Der getrocknete und gemahlene Ton wird in Wasser zusammen mit einem Dispergiermittel dispergiert und danach die Mischung dem zu gelierenden System zugesetzt, und zwar gleichzeitig mit einem Flockungsmittel welches

2

die Wirkung des Dispergiermittels aufhebt. Überraschenderweise zeigen wässrige Systeme mit hohem Ionengehalt, die mit einem solchen vordispergierten Ton vom Montmorillonittyp zum gelieren gebracht werden, gute Stabilität. Der gleiche getrocknete und gemahlene Ton kann auch als gelbildendes mittel für organische Flüssigkeiten verwendet werden, wenn man ihn zusammen mit einem geeigneten oberflächenaktiven Mittel in die Flüssigkeit einrührt.

Die bislang durchgeführten Tests zur Anwendung der vorliegenden Erfindung erfolgen mit aluminium- und Calciumhaltigen Tonen vom Montmorillonittyp. Tabelle I zeigt eine typische chemische Analyse eines Aluminium-Montmorillonit-Tones. Obgleich die in der Tabelle aufgeführten Bestandteile in Prozentwerten über Oxide angegeben sind, liegen sie in dem Ton in Wirklichkeit in Form von komplexen Aluminiumsilikat vor.

**Tabelle I**

| Bestandteil | Prozent |
|---|---|
| Si als $SiO_2$ | 69.49 |
| Fe als $Fe_2O_3$ | 7.94 |
| Al als $Al_2O_3$ | 16.65 |
| Ti als $TiO_2$ | 0.56 |
| Ca als $CaO$ | 0.04 |
| Mg als $MgO$ | 1.78 |
| Na als $Na_2O$ | 0.15 |
| K als $K_2O$ | 0.06 |
| C als $CO_2$ | 0.15 |
| S als $SO_2$ | 2.63 |
| P als $P_2O_5$ | 0.55 |
| Gesamt | 99.90 |

Nachstehend werden einige Tests beschrieben, die durchgeführt wurden, um die Brauchbarkeit der vorliegenden Erfindung zum Eindicken von wässrigen Systemen zu zeigen.

**Beispiel**

Roher Ton aus einem Aluminium-Montmorillonit-Lager wurde vollständig auf eine Korngröße kleiner als 3,4mm gemahlen, bei 40° in einem Ofen auf 12% Feuchtigkeit getrocknet und in einer Hammermühle auf eine Korngröße kleiner als 44μm gemahlen. Der Endgehalt an freiem Wasser betrug in dem gepulverten Ton 10,5%. Dispersionen von diesem Ton wurden wie in Tabelle II gezeigt unter Verwendung von TSPP als Dispergiermittel hergestellt. Das Durchmischen erfolgte mit einem Multimixer von mittlerer Scherkraft. Der Prozeßablauf bestand im Auflösen des TSPP in Wasser oder Harnstofflösung unter gleichzeitigem Rühren, Hinzufügen des Tons und Weiterrühren bis zur vollständigen Dispersion des gepulverten Tons, Gesamtzeit ca. 10 Min.

**Tabelle II**

Proben (Zusammensetzung in Gew. %)

| Bestandteile | A | B | C | D | E | F | G | H | I |
|---|---|---|---|---|---|---|---|---|---|
| Wasser | 299.5 | 299.0 | 298.5 | 298.0 | 297.5 | 297.0 | — | 300.0 | — |
| 20% Harnstofflsg. | — | — | — | — | — | — | 298.0 | — | 300.0 |
| TSPP | 0.5 | 1.0 | 1.5 | 2.0 | 2.5 | 3.0 | 2.0 | — | — |
| Ton | 100.0 | 100.0 | 100.0 | 100.0 | 100.0 | 100.0 | 100.0 | 100.0 | 100.0 |
| | 400.0 | 400.0 | 400.0 | 400.0 | 400.0 | 400.0 | 400.0 | 400.0 | 400.0 |
| Kommentar/ Bewertung | disperg. | disperg. | disperg. | disperg. | disperg. | disperg. | disperg. | abgesetzt | abgesetzt |
| Brookfield Visc., Pas. 10/100 U/min | 0,4/0,12 | 0,14/0,12 | 0,14/0,12 | 0,14/0,12 | 0,12/0,116 | 0,12/0,108 | 0,22/0,160 | — | — |
| Suspensions- test Brookfield- Testweise in Pas. 60 U/min zu Beginn | 0,75 | 0,90 | 1,0 | 1,2 | 1,2 | 1,7 | 1,2 | 0,3 | 0,35 |

Tests wurden durchgeführt, um die in Tabelle II gezeigten 25%igen Vordispersionen bewerten zu können. Bei den Tests wurde ein Düngemittel der simulierten Zusammensetzung 3-10-27 verwendet, das aus den naghfolgenden Bestandteilen hergestellt wurde.

| | |
|---|---|
| Wasser | 190g |
| Ton | 80g (2% Ton auf Trockensubstanz bezogen) |
| 10-34-0 | 295g |
| gep.KCl | 435g |
| | 1000g |

Das Produkt mit der Bezeichnung 10-34-0 ist eine Ammoniumphosphatlösung in Wasser. Sie enthält ca. 60% Polyphosphat. Jeder Versuch wurde mit einem Waring-Mischer vorgenommen, wobei die Geschwindigkeit über einen Transformator gesteuert wurde. Bei einer Spannung von 100V wurde die Probe aus Wasser und vordispergiertem Ton eine Minute lang gemischt. Das 10-34-0 Produkt wurde unter Rühren zugefügt. und der ganze Amsatz nochmals 3 Minuten gerührt. Das Kaliumchlorid-Flockungsmittel wurde zugefügt und die Spannung auf 120V erhöht. Nach dem das Kaliumchlorid vollständig eingearbeitet war/wurde die Mischung für weitere 5 Minuten bei 120V gerührt. Danach wurde die Viskosität in einem Brookfield-Viskosimeter bei 60 U/min bestimmt. Jede fertige Probe wurde in einem 1000 ml Zylinder über Nacht stehen gelassen und auf Absetzen, überstehende Flüssigkeit und Bodenkörper untersucht. Die Proben wurden einheitlich hergestellt und die Viskosität nach den gewünschten Standzeiten, z.B. 24 Std. 28 Std., eine Woche, ein Monat, usw. erneut gemessen. Ein unterster Vikositätswert von 1,2 Pa.s bei dem Suspensionstest ist annehmbar. Wie Tabelle II zeigt entsprechen oder übersteigen die Proben D bis G diesen Wert. So fanden sich Gehalte an TSPP von 1,5 bis 3% (bezogen auf das Gewicht an Ton) zufriedenstellendausgebildet in den geprüften Tondispersionen.

Um zu bestimmen, ob die Vordispersionen der Proben E und G noch wirkungsvoll gelbildend eingesetzt werden können, wurden sie weitere 5 Minuten in einem Mischer mit hoher Scherkraft gerührt. Die nach diesem zusätzlichen Verfahrensschritt erhaltenen Suspensionstestviskositäten sind in Tabelle III aufgeführt.

**Tabelle III**

| Verarbeitung | Brookfield Viskosität bei 6U/min in Pa·s | |
|---|---|---|
| | *Probe E* | *Probe G* |
| Mischen bei mittlerer Scherkraft | 0,12 | 0,12 |
| Mischen bei mittlerer und hober Scherkraft | 0,195 | 0,195 |

Aus der Tabelle ist ersichtlich, daß ein Mischen mit zusätzlicher hoher Scherkraft während der Herstellung der Vordispersionen die Wirksamkeit des vordispergierten Tones verbessert.

**Beispiel 2**

Wie Tabelle II zeigt, wurde am Anfang bei der Herstellung des vordispergierten Montmorillonit mit einem Gehalt von 25% Ton gearbeitet. Um feststellen zu können, ob andere Tongehalte vorzuziehen sind, wurde der Ton aus dem Beispiel in einer Menge von 25%, 30% und 35% zusammen mit 3% TSPP (% bezogen auf Gewicht an Ton)vordispergiert . Die Zusammensetzungen und Bewertungsergebnisse zeigt Tabelle IV. Die Verarbeitung erfolgte unter Anwendung mittlerer Scherkraft. Die Menge an Ton bezogen auf Trockengewicht wurde bei allen Tests auf 2% durch Festlegung der zugefügten Menge an vordispergiertem Ton eingestellt. Obwohl alle drei Vordispersionen bei den Suspensionstests gute Wirkung zeigten, war das Beispiel B die zufriedenstellendste Vordispersion.

**Tabelle IV**

Wirkung der Tonkonzentration auf die Viskosität der Vordispersionen

|  | Proben | | |
|---|---|---|---|
|  | 25% | 30% | 35% |
|  | A | B | C |
| *Bestandteile* | | | |
| Wasser | 297 g | 276.4 g | 255.8 g |
| TSPP | 3 g | 3.6 g | 4.2 g |
| Ton | 100 g | 120.0 g | 140.0 g |
|  | 400 g | 400.0 g | 400.0 g |
| *Eigenschaften der Vordispersion* | | | |
| Aussehen | dünn | mittl. Visc. | dick |
| Brookfield Visc., Pas 10/100 U/min | 0,120/0,116 | 3,00/1,5 | 10,5/5,200 |
| *Bewertung suspensionstest Brookfield Visc., Pas, 60 U/min* | | | |
| Beginn | 1,7 | 2,0 | 1,8 |
| nach 24 Std. | 1,8 | 2,1 | 2,15 |
|  | keine überstehende Lösung kein Sediment | | |

## Beispiel 3

Um die Wirkung einer Extrusion und einer Extrusion plus Zusatz von Rohsoda auf die Eindickfähigkeit von Montmorillonit-Ton zu bestimmen, wurde roher Ton aus Beispiel mit hinreichend Wasser durchgeknetet, so daß der Gehalt an freiem Wasser auf 51% anstieg. Das Extrusionsprodukt wurde in einem Ofen bei 40°C auf einen Gehalt von 15% freiem Wasser getrocknet und in einer Hammermühle gemahlen. Der gemahlene Ton wurde mit 3% TSPP (bezogen auf Tongewicht) auf 30% Feststoffgehalt vordispergiert und entsprechend dem Suspensionstest bewertet. Es zeigte sich,daß der extrudierte Ton leichter dispergiert als der zuvor bewertete nichtextrudierte Ton. Die Viskositäten des extrudierten Tons beim Suspensionstest lagen zu Beginn bei 2,05Pa.s und bei 2,25Pa-s nach 24 Stunden. Bei dem extrudierten Ton plus 1% Rohsodazusatz betrugen die entsprechenden Werte 2,3 bzw. 2,35Pa.s. Wegen der einfach durchzuführenden Vordispersion erscheinen beide Techniken erwähnenswert.

## Beispiel 4

Eine zweite Probe von rohem Ton wurde wie in Beispiel verarbeitet. Die Probe wurde in einer Reihe von Qualifikationstests, die üblicherweise bei kolloidalen Attapulgit angewendet werden, auf ihre Vikositätseigenschaften geprüft. Derartige Tests sind der Firetrol-Test der TVA Q-Test und der API Ausbeutetest. Suspensionsteste wurden ebenfalls durchgeführt. Die Ergebnisse bei undispergiertem Ton, einer 30%igen Vordispersion mit 3% TSPP (bezogen auf Gewicht an Ton) und Min-U-Gel 200, einem kolloidalen Attapulgit, sind in Tabelle V aufgeführt.

**Tabelle V**

Gelbildene Eigenschaften von Ochlocknee Montmorillonit

| | Proben | | |
|---|---|---|---|
| | *Trocken Mont. Ton* | *30% VD³ Mont. ton* | *Min-U-Gel 200* |
| FW⁴,% | 16.3 | — | 13.4 |
| *API Ausbeute (Bbl/T)* | | | |
| Frischwasser | 0.042 | —¹ | 0.124 |
| Salzwasser | 0.005 | 0.088 | 0.105 |
| Firetroltest (B. Visc., Pa·s 60U/min) | 0.100 | 5.980² | 1.800 |
| TVA Q-Test (B. Visc., Pa·s, 100 U/min) | 0.025 | 0.215 | 0.240 |
| Suspensionstest (B. Visc., Pa·s 60 U/min) | 0.800 setzt sich ab | 2.000 | 2.400 |
| | keine Gelbildg. | mittlere Gelbildung in Frischwasser und Ionensystemen | gute Gelbildung in Frischwasser und Ionensystemen |

Amnerkung: (1) keine Gelbildung, in etwa Visc. Wasser
(2) steifes Gel
(3) VD = vordispergiert
(4) FW = freier Wassergehalt

## Beispiel 5

Es wurden ebenfalls durchgeführt mit zwei Kalcium-Montmorillonitproben, erhalten vom Source Clay Minerals Repository, Dept. of Geologie, University of Missouri, Columbia of Missouri. Die Proben waren (1) STx-1 Kalcium-Montmorillonit (weiß), Gonzales County, Texas und (2) SAz-1 Kalcium-Montmorillonit (cheto), Apache County, Arizona. Es sind Standard-Bezugsmineralien für Tone, sind nichtquellend und werden im "Data handbook for Clay Minerals and Non-Metallic-Minerals" beschrieben, herausgegeben von Van Olpen und Fripiat, Pergamon Press (1979). Ihre nichtquellenden und nichtgelbildenden Eigenschaften zeigen sich beim Einrühren einer 30Gew.%igen Aufschlemmung in destilliertem Wasser mit einem Multimixer bei einer Zeitspanne von 10 Minuten. Es trat keine Gelbildung ein. Ähnliche Ergebnisse fand man bei der Verwendung von anderen Mischgeräten. Die Proben STx-1 und SAz-1 wurden mit 3% TSPP (bezogen auf das Tongewicht) in Wasser vordispergiert, wobei 5 Minuten lang mit einem Multimixer gerührt wurde. Die vordispergierten Tone wurden dann dem Suspensionstest unterworfen. Die Ergebnisse zeigt Tabelle VI.

**Tabelle VI**

Eigenschaften von Kalcium-Mortmorillonit

| | *Ka. Mont. STx—1* | *Ka. Mont. SAz—1* |
|---|---|---|
| *Anfangsbewertung* | | |
| FW, % | 10.5 | 10.9 |
| Trocken, Siebgröße 0.044 µm, % | 10.0 | 12.5 |
| API: bbl/Ton | | |
| Salzwasser | Keine Gelbildung | keine Gelbildung |
| Frischwasser | " " | " " |
| *Suspensionstest* Brookfield Visc. bei 60 U/min in Pa·s | | |
| trockener Ton | 0.20 | 0.10 |
| vordisp. Ton | 1.300 | 0.5 |

Da Saz-1 schlechte Ergebnisse zeigte,wurde es nochmal überprüft, in dem man einen zweiten Ansatz mit 25% Vordispersion in Wasser herstellte, wobei man eine Vorrichtung mit höherer Scherwirkung, nämlich einen Waring-Mischer verwendete (Waring-Blender). Der TSPP-Gehalt wurde auf 5%,bezogen auf Gewicht des Tons, gesteigert. Die Vordispersion wurde nach dem Suspensionstest geprüft und ergab bei 60 U/min eine Brookfield-Viskosität von 1.1 Pa.s. Die Ergebnisse zeigen, daß Kalcium-Montmorillonit ebenfalls den Verfahrenstechniken nach der vorliegenden Erfindung zugängig ist.

Obgleich an diese Theorie nicht gebunden, darf doch angenommen werden, daß die Vordispersion von nichtquellenden, nichtgelbildenden Montmorillonitton mit chemischen Dispergiermitteln in Wasser bei mittleren oder hohen Scherkräften zu einer Art Schicht trennenden Aufspaltung quer durch die"C"-Achse des Tonkristalls führt, wodurch eine Vielzahl dünnerer Plättchen gebildet werden. Wenn diese das Dispergiermittel aufnehmen, dann sind sie beladen und zeigen die niedrige Viskosität von mineralischen Dispersionen. Wird jedoch der schützende Beladungsmechanismus durch Ausflocken der Tonteilchen zerstört, so tritt eine Wechselwirkung der Teilchen ein und man erhält eine Gelstruktur mit höherer Viskosität.

Das Ausflocken der Tondispersion läßt sich mit einem der Neutralisatoren für Dispergiermittel bewirken, wie z.B. mit löslichen polyvalenten Kationen (Salze) mit einem Gehalt von z.B. $Ca^{2+}$, $Al^{3+}$, die mit den Dispergiermittel reagieren, oder hohe Ionenkonzentrationen ($K+$, $NH4+$, $Na+$), die die Ladungsschicht der dispergierten Teilchen zusammenbrechen läßt.

Die vorliegende Erfindung zeigt, daß nicht gelbildende Montmorillonittone aufgrund ihrer entsprechenden Eigenschaften als Gelbildner verwendet werden können. Eine spezielle Verarbeitung derartiger Tone nach der vorliegenden Erfindung macht sie als Gelbildner für wässrige Lösungssysteme geeignet.

**Patentansprüche**

1. Verfahren zum Eindicken einer wässrigen Lösung unter Verwendung eines nichtgelbildenden gemahlenen Tones, wobei der Ansatz mit einem Dispergiermittel versetzt und gerührt wird, gekennzeichnet durch folgende Schritte:
- Aluminium- oder Calcium-Montmorillonit-Ton wird auf einen freien Wassergehalt von 10 bis 15% getrocknet und vollständig auf einen Feinheitsgrad von mindestens 45 µm gemahlen, der gemahlene Ton wird in Wasser oder einer wässrigen Harnstofflösung unter Zusatz eines Phosphats oder Phosphatglases als Dispergiermittel zur Erzeugung einer Vordispersion dispergiert und diese zusammen mit einem Ausflockmittel der einzudickenden wässrigen Lösung zugefügt, und
- das resultierende Produkt wird bis zur Gelbildung des Tons gerührt.

2. Verfahren nach Anspruch 1, dadurch gekennzeichnet, daß als Dispergiermittel Tetranatriumpyrophosphat verwendet wird.

3. Verfahren nach Anspruch 1 oder 2, dadurch gekennzeichnet, daß als Ausflockmittel eine polyvalente Kationen enthaltende Verbindung verwendet wird.

4. Verfahren nach Anspruch 1 oder 2, dadurch gekennzeichnet, daß als Ausflockmittel ein monovalentes Kation enthaltende Verbindung verwendet wird, die in wässriger Lösung eine hohe Ionenkonzentration ihres Kations ermöglicht.

5. Verfahren nach einem der Ansprüche 1 bis 4, dadurch gekennzeichnet, daß das Tetranatriumpyrophosphat in einer Menge von 2 bis 3 Gew% des Tons verwendet wird.

6. Verfahren nach einem der Ansprüche 1 bis 5, dadurch gekennzeichnet, daß der Tongehalt der Vordispersion ca 25 bis 35% bezogen auf das Gesamtgewicht beträgt.

7. Verfahren nach einem der Ansprüche 1 bis 6, dadurch gekennzeichnet, daß der Ton vor Ausbildung der Vordispersion extrudiert wird.

8. Verfahren nach Anspruch 7, dadurch gekennzeichent, daß dem Ton vor der Extrusion Rohsoda zugesetzt wird.

**Claims**

1. Process for thickening solutions using clays which do not normally form gels, wherein a dispersing agent is added under stirring to the starting solution, characterized by the following process steps:.
- aluminum clay or calcium montmorillonite clay is dried to a free water content of from about 10 to 15% and pulverized completely to a degree of fineness of at least 45 µm, said pulverized clay being dispersed in water or an aqueous urea solution by admixing a phosphate or phosphate glass as dispersing agent for producing a first dispersion which is added together with a deflocculation agent to the aqueous solution to be thickened,
- the resulting product being stirred until the clay forms a gel.

2. Process as defined by claim 1, <u>characterized in that</u> as dispersing agent is added tetrasodiumpyrophosphate.

3. Process as defined by either of claims 1 or 2, <u>characterized in that</u> as deflocculation agent is used a polyvalent cationscontaining compound.

**0 065 258**

4. Process as defined by either of claims 1 or 2, <u>characterized in that</u> deflocculation agent is used a monovalent cation-containing compound permitting high ionic concentration of its cation in aqueous solution.

5. process as defined by either of clJims 1 to 4, <u>characterized in that</u> the tetrasodiumpyrophosphate is used in an Jmount of 2 to 3 % by weight of the clay.

6. process as defined by either of claims 1 to 5, <u>characterized in that</u> the clay content of the first dispersion Jmounts to about 25 to 35 % of the total weight.

7. process as defined by either of claims 1 to 6, <u>characterized in that</u> before forming the first dispersion the clay is extruded.

8. process as defined by claim 7, <u>characterized in that</u> before extrusion the clay is added with crude sodium carbonate.

**Revendications**

1. Procédé d'épaississement d'une solution aqueuse, en utilisant une argile broyée ne formant pas de gel, la charge étant mélangée à un agent dispersant et étant agitée, caractérisé en ce qu'il consiste à effectuer les stades suivants:

. à sécher de l'argile de montmorillonite aluminique ou calcique jusqu'à ce qu'elle ait une teneur en eau libre de 10 à 15% et à la broyer entièrement jusqu'à ce qu'elle ait dans sa totalité un degré de finesse l'au moins 45 µm, à disperser l'argile broyée dans de l'eau ou dans une solution aqueuse d'urée, avec addition d'un phosphate ou d'un verre au phosphate comme agent de dispersion, pour obtenir une pré-dispersion et à ajouter celle-ci en même temps qu'un agent de floculation à la solution aqueuse à épaissir, et

. à agiter le produit obtenu jusqu'à la gélification de l'argile.

2. Procédé suivant la revendication 1, caractérisé en ce qu'il consiste à utiliser, comme agent dispersant, du pyrophosphate tétrasodique.

3. Procédé suivant la revendication 1 ou 2, caractérisé en ce qu'il consiste à utiliser, comme agent de floculation, un composé contenant des cations polyvalents.

4. Procédé suivant la revendication 1 ou 2, caractérisé en ce qu'il consiste à utiliser, comme agent de floculation, un composé, contenant un cation monovalent, qui permet d'avoir une grande concentration ionique de son cation en solution aqueuse.

5. Procédé suivant l'une des revendications 1 à 4, caractérisé en ce qu'il consiste à utiliser du pyrophosphate tétrasodique en une quantité représentant de 2 à 3% de l'argile.

6. Procédé suivant l'une des revendications 1 à 5, caractérisé en ce que la teneur en argile de la pré-dispersion représente de 25 à 35% environ du poids total.

7. Procédé suivant l'une des revendications 1 à 6, caractérisé en ce qu'il consiste à extruder l'argile avant la constitution de la pré-dispersion.

8. Procédé suivant la revendication 7, caractérisé en ce qu'il consiste à ajouter à l'argile, du carbonate de sodium brut avant l'extrusion.

8